# EUROPEAN PATENT APPLICATION

(11) **EP 4 336 706 A2**
(43) Date of publication of application: **13.03.2024**
(21) Application number: 23184921.7
(22) Date of filing: 12.07.2023
(51) Int. Cl.: H02J 50/12

(54) **DUAL OPERATION CHARGING PAD**

(30) Priority: 14.08.2022 US 202263397860 P; 22.06.2023 US 202318339546
(71) Applicant: Powermat Technologies Ltd., 4970602 Petach Tikva (IL)
(72) Inventor: SHERMAN, Itay, 4501560 Hod Hasharon (IL); MACH, Elieser, 90938 Rosh Tzurim (IL)
(74) Representative: Maiwald GmbH

(57) **Abstract**

A wireless power transmitter is provided. The wireless power transmitter includes a coil for inductively providing an electromagnetic energy to a receiving coil of a wireless receiver. The wireless power transmitter includes a capacitor connected to the coil. The wireless power transmitter includes a cover comprising a first layer and a second layer. The first layer receives the second layer. The second layer is interchangeable with other second layers.

## Description

### CROSS REFERENCE TO RELATED APPLICATIONS

This application claims priority from U.S. Provisional Patent Application No. 63/397,860, entitled "DUAL OPERATION CHARGING PAD," filed on August 14, 2022, which is hereby incorporated by reference as if set forth in full in this application for all purposes.

### BACKGROUND

Some conventional wireless charging pads, such as for automotive vehicle installations, are built with multi-coil configurations. The multi-coil configurations are designed to achieve larger engagement range with mobile devices, where a coil of the multi-coil configurations with a best alignment with a mobile devices is used to perform a power transfer therebetween.

Other wireless charging pads are built with magnet sets that provide a magnetic attraction to align and lock a mobile device (with corresponding magnet sets) to a specific location on the wireless charging pads. The magnet sets are arranged around transmitter and receiver coils, with one set on a transmitter and another on a receiver.

However, multi-coil configurations with magnetic sets that provide magnetic attractions are problematic because the magnet sets arranged around the transmitter and receiver coils cannot be supported as the magnet sets around one coil would block a field of an adjacent coil in the multi-coil configurations. Yet, single coil wireless charging pads with magnetic sets that provide magnetic attractions have limited engagement range and operational level with respect to mobile devices that do not have corresponding magnet sets. Additionally, any presence of magnet sets in a transmitter of a convention wireless charging pad limits a power transfer capability of that transmitter (e.g., an operational level is limited to a 5W baseline/basic power profile (BPP) mode of the Wireless Power Consortium (WPC) specification).

### SUMMARY

According to one or more embodiments, a wireless power transmitter is provided. The wireless power transmitter includes a coil for inductively providing an electromagnetic energy to a receiving coil of a wireless receiver. The wireless power transmitter includes a capacitor connected to the coil. The wireless power transmitter includes a cover comprising a first layer and a second layer. The first layer receives the second layer. The second layer is interchangeable with other second layers.

According to one or more embodiments, the at least one coil comprises at least two coils. According to one or more embodiments, the wireless power transmitter comprises at least one switch connected to the at least one capacitor and configured to switch the at least one coil on and off. According to one or more embodiments, the first layer comprising a solid case around the wireless power transmitter. According to one or more embodiments, the second layer comprising anti-slip material. According to one or more embodiments, the second layer comprising one or more magnets. According to one or more embodiments, the second layer comprising one or more markings. According to one or more embodiments, the second layer comprising a groove aligned with a mechanical switch of the wireless power transmitter. According to one or more embodiments, the second layer comprising one or more near field communication antenna. According to one or more embodiments, the wireless power transmitter obtains information from a device as to a standard or features that the device supports. The embodiments mentioned hereinbefore can be combined with each other.

According to one or more embodiments, the cover includes a first layer and a second layer. The first layer receives the second layer. The second layer is interchangeable with other second layers. The cover is configured to attach to a wireless power transmitter that includes at least one coil for inductively providing an electromagnetic energy to at least one receiving coil of a wireless receiver.

According to one or more embodiments, the first layer comprising a solid case around the wireless power transmitter. According to one or more embodiments, the second layer comprising anti-slip material. According to one or more embodiments. According to one or more embodiments, the second layer comprising one or more magnets. According to one or more embodiments, the second layer comprising one or more markings. According to one or more embodiments the second layer comprising a groove aligned with a mechanical switch of the wireless power transmitter. According to one or more embodiments the second layer comprising one or more near field communication antenna. The embodiments mentioned hereinbefore can be combined with each other.

According to one or more embodiments, the above wireless power transmitter and/or the cover can be implemented as a method, an apparatus, system, and/or a computer program product.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 depicts a system in accordance with one or more embodiments;
FIG. 2 depicts a system in accordance with one or more embodiments; and
FIG. 3 depicts a method in accordance with one or more embodiments.

### DETAILED DESCRIPTION

Embodiments disclosed herein may include apparatuses, systems, methods, and/or computer program products for a dual operation charging pad. The dual operation charging pad provides optimal operations for single coil wireless charging pads with magnetic sets and for multi-coil wireless charging pads.

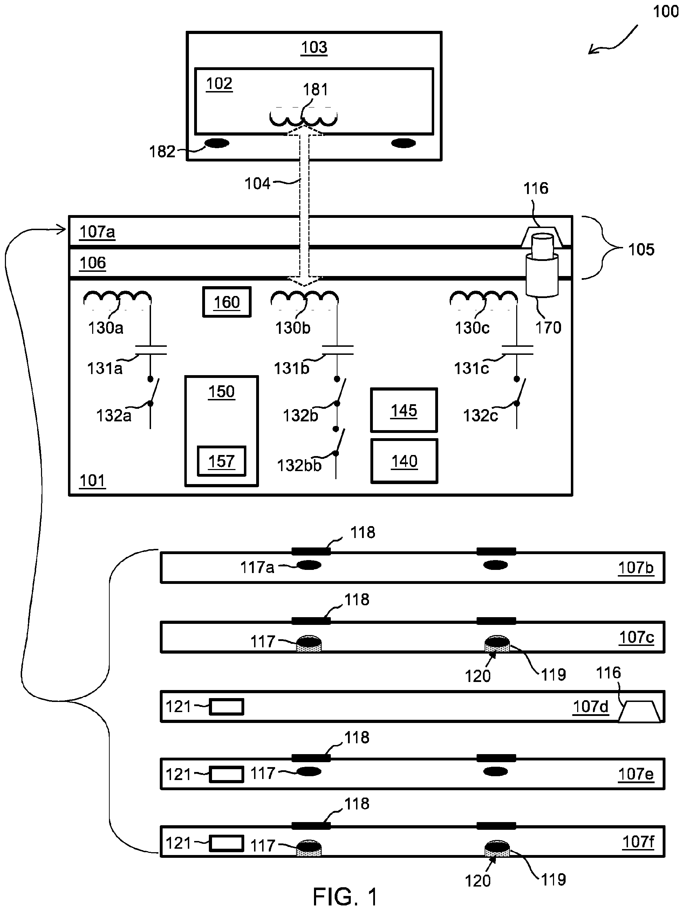

FIG. 1 shows a system 100 (e.g., the wireless power system) in accordance with one or more embodiments. The system 100 comprises wireless power devices 101 and 102 for transmitting and receiving electromagnetic energy 104 (i.e., power). For ease of explanation, and without particularly limiting the functions of the wireless power devices 101 and 102, these devices 101 and 102 are referred herein, such as a power transmitter 101 or Tx 101 and a power receiver 102 or Rx 102, respectively.

The Tx 101 can be any device that can generate electromagnetic energy 104 from, for example, a power source to a space around the Tx 101 that is used to provide power to the Rx 102 and/or one or more devices 103. The Rx 102 is any device that can receive, use, and/or store the electromagnetic energy 104 when present in the space around the Tx 101. Note that the Rx 102 can have a similar or the same component structure as the Tx 101, and vice versa (e.g., both of the wireless power devices 101 and 102 can include similar electrical and provide similar functionality based on a particular operation of the system 100). The one or more devices 103 can be any electronic mobile apparatus, example of which include mobile phones, tablet computers, laptops, personal digital assistants, watches, etc. According to one or more embodiments, respective to automotive implementations, the power source can be a car battery of a vehicle, which is a direct current (DC) source. For example, most wireless power consortium (WPC) transmitters have a DC input that is converted into an alternating current (AC) magnetic field. The AC magnetic flux is captured in the WPC receiver and translated to whatever energy a load of the WPC receiver requires (e.g., DC power for charging a battery).

As shown in FIG. 1, the system 100 further comprises a cover 105 including at least one layer, such as a first layer 106 and a second layer 107 (e.g. a mat, an anti-slip layer, a decorative layer, space for advertisement, etc.). According to one or more embodiments, the first layer 106 of the cover 105 can be a solid case that is laid on or around the Tx 101 and configured to receive the second layer 107 of the cover 105 (so that the second layer 107 is interchangeable). For example, the solid case can be made of plastic, rubber, or other material. According to one or more embodiments, the at least one coil 130 is located below the cover 105 (e.g., below the first layer 106, which can be a thin plastic layer of one (1) millimeter thickness), and the second layer 107 is placed on top of the cover 105.

According to one or more embodiments, the second layer 107 can be any anti-slip material, such as rubber or like material of a one (1) to two (2) millimeter thickness. Further, the second layer 107 of the cover 105 can be interchangeable amongst other second layers 107a, 107b, 107c, 107d, 107e, and 107f. By way of example, the second layer 107acan include at least one groove 116. The second layer 107b can include at least one magnet 117a and at least one marker 118a. The second layer 107c can include at least one magnet 117 and at least one marker 118, where the at least one magnet 117 is inset into a grove 119 and held in place by glue 120. The second layer 107d can include at least one near field communication (NFC) antenna 121. The second layer 107e can include at least one magnet 117, at least one marker 118, and/or at least one NFC antenna 121. The second layer 107f can include at least one magnet 117 (inset into a grove 119 and held in place by glue 120), at least one marker 118, and at least one NFC antenna 121

According to one or more embodiments, the NFC antenna 121 can include coils. According to one or more embodiments, the NFC antenna 121 can also include a chip and antenna combination that is connected to an energy source to operate NFC capabilities. In this regard, information on the chip and antenna combination can be transferred into the Tx 101 wirelessly or a stem (e.g., see the mechanical device described herein). The stem could also have galvanic connections to read the information from the chip and antenna combination. According to one or more embodiments, the chip of the chip and antenna combination could be located on in the Tx 101 with the antenna in the second layer 107d. In such case, power to the ship and antenna combination could be provided by the Tx 101 to the second layer 107d.

The Tx 101 includes at least one coil 130, which can be connected to at least one capacitor 131 and at least one switch 132. According to one or more embodiments, and by way of example, the Tx 101 can include a first coil 130a with a capacitor 131a and a switch 132a; a second coil 130b with a capacitor 131b, a switch 132b, and a switch 132bb; and a third coil 130c with a capacitor 131c and a switch 132c. Further, while a three coil 130 configuration for the Tx 101 is shown in FIG. 1, the Tx 101 can also provide a single coil, two (2) coil solution, and greater than two (2) coil solutions. According to one or more embodiments, the Tx 100 can include a two (2) coil configuration where one horizontal coil is for horizontal placement of the device 103 and another vertical coil for a standing position of the device 103 (e.g., for consumer electronic implementations).

The Tx 101 also includes a bridge 140, a driver 145, and a controller 150, which further includes firmware 157. According to one or more embodiments, the bridge 140 includes circuitry, such as a full bridge topology or half bridge topology. The Tx 101 can also include a sensor 160 and/or a mechanical device 170. The sensor 160 can be any transducer for detecting one of the second layers 107, such as a hall effect sensor. The mechanical device 170 can be any mechanism that by mechanical action detects the one of the second layers 107. For example, the mechanical device 170 can be a switch that includes a base, a spring, and a stem that depresses when one of the second layers 107b, 107c, 107e, and 107f. Note that with the at least one groove 116 installed in the second layers 107a and 107d, the mechanical device 170 would not be depressed and therefore detected by inversion. Note that multiple control lines and detection lines (e.g., sensing circuits, circuitry, etc.) connects the controller 150 to components of the Tx 101; however, for ease of display, these control lines and detection lines are omitted. The Tx 102 can also include feedback circuitry to communicate with the Rx 101 and other systems.

According to one or more embodiment, the at least one coil 130 that is driven by the driver 145 and the bridge 140, which is controlled by the controller 150. For example, the controller 150 is providing the control signals for one or more FETs (e.g., four FETs) of the bridge 140. The at least one coil 130 of the Tx 101 can include standard electrical wiring copper wires folded and/or Litz wires. For example, the at least one coil 130 and a resonant capacitor provide an LC circuit for generating an inductive current in accordance with operations of the bridge 140and the controller 150 to support power transmissions (e.g., generate a magnetic field around the Tx 101 to wirelessly provide induced power that charges the one or more devices 103). Further, the bridge 140, the at least one coil 130, and/or the resonant capacitor can be considered a resonance circuit of the Tx 101.

According to one or more embodiments, the driver 145 can be based on commercially available electronic device designed to operate based on signals of the controller 150. According to one or more embodiments, the bridge 140 includes circuitry, such as a full bridge topology or half bridge topology, or can be based on commercial components such as drivers and power FETs.

According to one or more embodiments, the controller 150 can include a sensing circuits, circuitry, and/or software, for detecting/sensing voltage, current, or other features of the Tx 101. The controller 150 can control and/or communicate with any part of the Tx 101 to provide modulation as needed for power transfer. The controller 150 can include software therein (e.g., the firmware 157) determining an operating frequency, etc. In this regard, the controller 150 can utilize a system memory and a processor, as described herein, to store and execute the firmware 157. According to one or more embodiments, the controller 150 can be utilized to perform computations required by the sensing circuit, circuitry, and/or software or any of the circuitry therein. For example, the controller 150 can monitor voltage of the resonance circuit (e.g., capacitor voltage of capacitor or inductor voltage of the at least one coil 130) as well as AC currents on the resonance circuit (e.g., by measuring of voltage of resistive element, via capacitor voltage derivation, current transformer, etc.).

According to one or more embodiments, the controller 150 can transmit and/or receive information and instructions to and from elements of the Tx 101 (e.g., such as the driver 145, the bridge 130, and/or any wiring junction or resistor). According to one or more embodiments, the controller 150 can may utilize the firmware 157 as a mechanism to operate and control operations of the Rx 102. In this regard, the controller 150 can be a computerized component or a plurality of computerized components adapted to perform methods such as described herein.

The Rx 102 can include an inductor implemented as at least one receiving coil 181. The at least one receiving coil 181 of the Rx 102 can include standard electrical wiring copper wires folded and/or Litz wires. Thus, the at least one receiving coil 181 of the Rx 102 can be used to inductively couple to at least one coil 130 of the Tx 101. The one or more devices 103 can include at least one magnet 182, which can also be location with the Rx 102. According to one or more embodiments, the Rx 102 includes circuitry for receiving, providing, and/or storing the electromagnetic energy 104. Further, the Rx 102 can provide the electromagnetic energy 104 as power to a load (e.g., one or more devices 103 or a battery therein). Generally, the load can be a single instance or any combination of electronic components, such as the one or more one or more battery packs, as well as other circuit components (e.g., resistors, capacitors, etc.).

According to one or more embodiments, the system 100 can provide at least two configurations for the cover 105, where a first configuration is optimized for a first mobile device 103 (e.g., an iPhone) with magnets 182 and a second configuration is optimized for a second mobile device 103 (e.g., a Google Pixel or other non-Apple product) without magnets.

In this regard, a user can configure the system 100 with one of the second layers 107b, 107c, 107e, and 107f to meet the first configuration, as the magnets 117 (e.g., set of magnets above that specific second coil 130b) would automatically move the first mobile device 103 and the at least one receiving coil 181 over the second coil 130b (e.g., dedicated to operations with handsets that use magnets or attraction based positioning). For example, one of the second layers 107b, 107c, 107e, and 107f for the iPhone includes embedded magnets in a center region, such that when the iPhone is placed on top of the Tx 101 the magnets 117 form a border (e.g., a circle) around the second coil 130b below the cover 105. The second layers 107b, 107c, 107e, and 107f may also have the markers 118 to show a central alignment of the iPhone thereon. Examples of the markers 118 can include, but are not limited to, one or more inked shapes, one or more stitched shapes, and one or more inlayed shapes on the second layer 107. 107c and 107f. As described herein, the magnets 115 may be embedded in the anti-slip layer as part of pad molding (as shown in the second layers 107b and 107e) or can be secured into cavities 119 from a plastic side (as shown in the second layers 107c and 107f, where the glue 119 holds the magnets 117 inside the grove 119).

Further, a user can configure the system 100 with one of the second layers 107a and 107d to meet the second configuration, which does not include magnets. In the absent of magnets, the Tx 101 can leverage at least two coils 130 in a multi-coil configurations that provides a larger engagement range with the mobile device 130, For example, one of the second layers 107a and 107d for the Google Pixel or other non-Apple does not include magnets. where a coil of the multi-coil configurations with a best alignment with a mobile devices is used to perform a power transfer therebetween. According to one or more embodiments, the additional switch 132bb allows for efficient operation on an alternate frequency and/or alternate frequency range vs. an original frequency and/or an original frequency range. For example, the original frequency range can be 100khz to 200khz while then alternate frequency being 360khz or close thereto. By way of further example, the additional switch 132bb connected to the second coil 130b is included to enable changing of resonance capacitors to support an alternate frequency operation at 360khz. The other coils 130a and 130c do not need a similar additional switch 132bb, as the other coils 130a and 130c can active in BPP or extended power profile (EPP) mode (and will not use the 360khz operation).

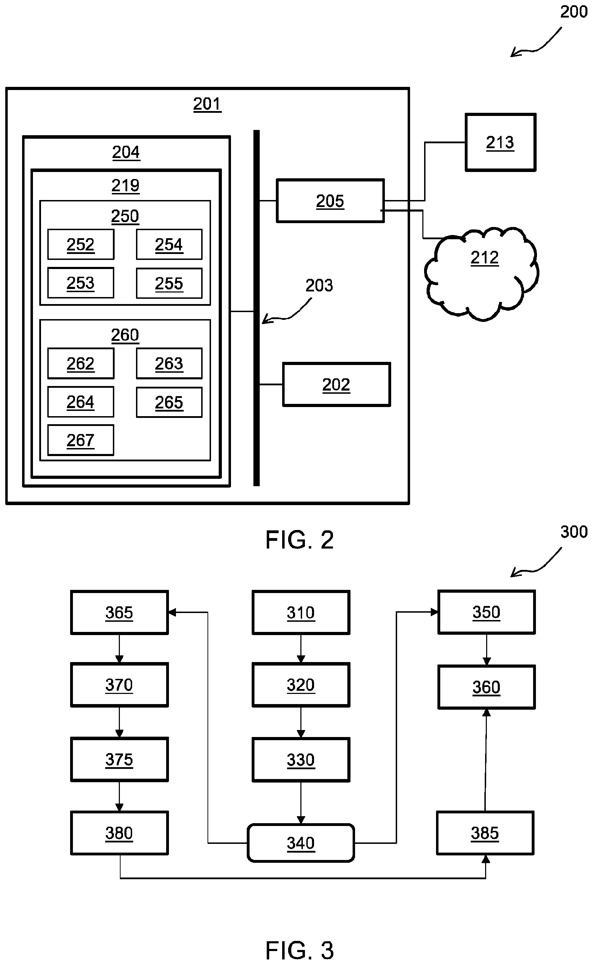

FIG. 2 depicts a system 200 in accordance with one or more embodiments. The system 200 has a device 201 (e.g., the Tx 101 of the system 100 of FIG. 1) with one or more central processing units (CPU(s)), which are collectively or generically referred to as processor(s) 202 (e.g., the controller 150 of FIG. 1). The processors 202, also referred to as processing circuits, are coupled via a system bus 203 to system memory 204 and various other components. The system memory 204 can include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 201, and the RAM is read-write memory coupled to the system bus 203 for use by the processors 202.

FIG. 2 further depicts one or more adapters 205, such as an I/O adapter, a communications adapter, and an adapter coupled to the system bus 203. The I/O adapter may be a small computer system interface (SCSI) adapter that communicates with a drive and/or any other similar component. The communications adapter interconnects the system bus 203 with a network 212, which may be an outside network (power or otherwise), enabling the device 201 to communicate data and/or transfer power with other such devices (e.g., such as the Tx 101 connecting to the Rx 102). A display 213 (e.g., screen, a display monitor) is connected to the system bus 203 by the adapter, which may include a graphics controller to improve the performance of graphics intensive applications and a video controller. Additional input/output devices can be connected to the system bus 203 via the adapter, such as a mouse, a touch screen, a keypad, a camera, a speaker, etc.

In one embodiment, the adapters 205 may be connected to one or more I/O buses that are connected to the system bus 203 via an intermediate bus bridge. Suitable I/O buses for connecting peripheral devices such as hard disk controllers, network adapters, and graphics adapters typically include common protocols, such as the Peripheral Component Interconnect (PCI).

The system memory 204 is an example of a computer readable storage medium, where software 219 can be stored as instructions for execution by the processor 202 to cause the device 201 to operate, such as is described herein with reference to FIGS. 3-4. In connection with FIG. 1, the software 219 can be representative of firmware 157 for the Tx 101, such that the memory 204 and the processor 202 (e.g., of the controller 150) logically provide operations 250, 252, 253, 254, 260, 262, 263, 265, 266, and 267.

Regarding operation 250, the Tx 101 can initiate operations and detect an existence of the second layer 107. For example, at operational sub-block 252, the controller 150 can analyze a response to an analog ping the Tx coils 130 by comparing a resulting decay rate and oscillation frequency to a set of defined values. By way of another example, the cover 105 can be galvanically connected to the Tx 101, such that signals can be transferred through the galvanic connection. By way of another example, signals can also be done transferred wirelessly. The response will be different depending on type and configuration of the second layer 107, such as due to the effect of the magnets (e.g., decay oscillation frequency usually shifts higher and decay rate increase with the second layer 107 with magnets, in contrast to the second layer 107 without magnets) 117. Note that the magnets 117 can be arranged in each of the second layers 107b, 107c, 107e, and 107f to provide an alternative response. At operational sub-block 253, the controller 150 can detect a (e.g., depressed or extended) position of the mechanical switch 150 with respect to one of the second layers 107 to determine which the configuration the system 100. At operational sub-block 254, the controller 150 can detect the status of the sensor 160 (e.g., a hall effect sensor 160) to determine if the magnets 117 are present above the first layer 106. At operational sub-block 255, the controller 150 can detect a presence of the NFC chip 121 (e.g., NFC tags).

Regarding operation 260, once a phone is placed on a mat (e.g., the second layer 107), the Tx 101 can perform a standard engagement process 260 once the one or more devices 103 are placed on the cover 105. For instance, at operational sub-block 262, the Tx 101 detects the installed second layer 107. At operational sub-block 263, the Tx 101 detects the device 103, which has been placed on the cover 105. At operational sub-block 264, the Tx 101 obtains information from the device 103 as to a specific standard and features that the device 103 supports, as part of this engagement process and specifically for attraction based positioning support. At operational sub-block 265, the Tx 101 generates alerts or notifications via light emitting diodes, auditory signals, a vehicle infotainment system, etc. For example, alerts or notifications can be provided by a graphical user interface of a vehicle (e.g., the Tx 101 can notify a user over a screen of a multimedia unit that a specific cover 105 was detected). By way of example, the alerts or the notifications can signal installation/detection of the second layer 107, an anti-slip layer type, the device 103, a device type, whether an installed second layer 107 is optimal for the detected device 103. At operational sub-block 265, the Tx 101 generates a recommendation or instruction to replace the installed second layer 107 or the device detected 103.

FIG. 3 depicts a method 300 in accordance with one or more embodiments. The method 300 can be embodied by the firmware 157 and executed by the controller 150. Generally, the method 300 is an implementation of a dual operation charging embodied by the system 100 (i.e., signal learning). More particularly, the dual operation charging by the system 100 provides optimal operations for single coil wireless charging with magnets and for multi-coil wireless charging without magnets.

The method 300 begins when, at block 310, the controller 150 detects the second layer 107 or lack thereof. The second layer 107 is initially unknown and is identified via the detection. Accordingly, the controller 150 can detect the second layer 107 via one or more of the NFC chip 121, the sensor 160, the mechanical switch 170, magnetic field changes due the presence of magnets 182. By way of example, the controller 150 detects the second layer 107c, which includes the magnets 117 that are glued 120 into the groove 119.

At block 320, the controller 150 detects a device 103. According to one or more embodiments, the controller 150 detects a presence of the coil 181 as it enters the magnetic field of generated by the coil 130b. At block 330, the controller 150 identifies the device 103. Device identification can be achieved through in-band communication between the Tx 101 and the device 103. The device 103 can be without magnets according to one or more embodiments and the detection is through the in-band communication. The device 103 can also include the magnets 182. In turn , device identification can also achieved through detection of the magnets 182 in the magnetic field of the Tx 101. By way of example, the device 103 can be an iPhone or other Apple product that includes the magnets 182.

At decision block 340, the controller 150 determines if the second layer 107 is configured for the specific device 103 detected. In another aspect of the invention, the Tx 101 can operate differently when the Tx 101 detects a layer 107 configured for Apple products and when the Tx 101 detects a layer 107 configured for other products. For the Apple products, the controller 150 of the Tx 101 can limit operations and engagement to the second (or a central) coil 130b. For example, limiting operations and engagements can include turning off the switches 132a and 132c. Accordingly to one or more embodiments, the controller 150 can utilize attraction based positioning when the device 103 supports such a protocol, such as by using an alternate frequency of 360khz. If the anti-slip layer 107 is configured for the device 103 (i.e., the anti-slip layer and the device include the magnets), the method 300 proceeds to block 350.

At block 350, the controller 150 initiates charging. According to one or more embodiments, charging parameters of the Tx 101 can include Q factors and the like based on calibrated parameters for the Apple product that include the magnets 182.

At block 360, the controller 150 generates alerts and notifications. The alerts and notifications (via light emitting diodes, auditory signals, a vehicle infotainment system, etc.) can indicate that that the device 103 is compatible (or optimal for) with the second layer 107. The alerts and notifications (via light emitting diodes, auditory signals, a vehicle infotainment system, etc.) can indicate that that the device 103 is charging or is charged, as well as temperature, power on/off state, identification, and the like.

Returning to block 340, if the anti-slip layer 107 is not configured for the device 103 (i.e., the anti-slip layer does not include magnets and/or the device include the magnets), the method 300 proceeds to block 365.

At block 365, the controller 150 generates alerts and notifications to replace the device or the second layer 107. generates a recommendation or instruction to replace the installed second layer 107. At block 370, the controller 150 detects a new layer 107. The new layer 107 does not include the magnets 117. At block 375, the controller 150 detects the device 103. At block 380, the controller 150 initiates charging. According to one or more embodiments, the mode of charging and protocol used will be affected by the detected second layer type and device type. As an example if a second layer with magnets is detected and a handset supporting magnetic attraction and dedicated protocol such as MPP , then the Tx will operate using single coil and the MPP protocol, while if the second layer detected is detected with the same handset, then 3 coil operation will be used and a protocol such as BPP or EPP used. The method 300 proceeds to block 360.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, fieldprogrammable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardwarebased systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A wireless power transmitter comprising:
at least one coil for inductively providing an electromagnetic energy to at least one receiving coil of a wireless receiver;
at least one capacitor connected to the at least one coil; and
a cover comprising a first layer and a second layer, the first layer being configured to receive the second layer, and the second layer being interchangeable with other second layers.

2. The wireless power transmitter of claim 1, wherein the at least one coil comprises at least two coils.

3. The wireless power transmitter of claim 1 or 2, wherein the wireless power transmitter comprises at least one switch connected to the at least one capacitor and configured to switch the at least one coil on and off.

4. The wireless power transmitter of any of the preceding claims, wherein the first layer comprising a solid case around the wireless power transmitter.

5. The wireless power transmitter of any of the preceding claims, wherein the second layer comprising anti-slip material.

6. The wireless power transmitter of any of the preceding claims, wherein the second layer comprising one or more magnets.

7. The wireless power transmitter of any of the preceding claims, wherein the second layer comprising one or more markings.

8. The wireless power transmitter of any of the preceding claims, wherein the second layer comprising a groove aligned with a mechanical switch of the wireless power transmitter.

9. The wireless power transmitter of any of the preceding claims, wherein the second layer comprising one or more near field communication antenna.

10. The wireless power transmitter of any of the preceding claims, wherein the wireless power transmitter obtains information from a device as to a standard or features that the device supports.

11. A cover comprising a first layer and a second layer, the first layer being configured to receive the second layer, the second layer being interchangeable with other second layers, and the cover being configured to attach to a wireless power transmitter comprising at least one coil for inductively providing an electromagnetic energy to at least one receiving coil of a wireless receiver.

12. The cover of claim 11, wherein the first layer comprising a solid case around the wireless power transmitter.

13. The cover of claim 11 or 12, wherein the second layer comprising anti-slip material.

14. The cover of any of the claims 11 to 13, wherein the second layer comprising one or more magnets.

15. The cover of any of the claims 11 to 14, wherein the second layer comprising one or more markings.

16. The cover of any of the claims 11 to 15, wherein the second layer comprising a groove aligned with a mechanical switch of the wireless power transmitter.

17. The cover of any of the claims 11 to 16, wherein the second layer comprising one or more near field communication antenna.
